# EUROPEAN PATENT SPECIFICATION

(11) **EP 3 831 999 B1**
(45) Date of publication and mention of the grant of the patent: **24.05.2023**
(21) Application number: 18928409.4
(22) Date of filing: 10.12.2018
(51) Int. Cl.: D06F 37/30, D06F 37/40

(54) **DRIVE SYSTEM OF WASHING MACHINE AND DRUM WASHING MACHINE HAVING SAME**
ANTRIEBSSYSTEM FÜR WASCHMASCHINE UND TROMMELWASCHMASCHINE DAMIT
SYSTÈME D'ENTRAÎNEMENT DE MACHINE À LAVER ET MACHINE À LAVER À TAMBOUR L'UTILISANT

(30) Priority: 03.08.2018 CN 201810880076; 03.08.2018 CN 201821254938 U
(43) Date of publication of application: 09.06.2021
(73) Proprietor: Guangdong Welling Motor Manufacturing Co., Ltd., Foshan, Guangdong 528311 (CN); Midea Welling Motor Technology (Shanghai) Co., Ltd, Shanghai 201203 (CN)
(72) Inventor: YAN, Tiantian, Foshan, Guangdong 528311 (CN); HU, Yiming, Foshan, Guangdong 528311 (CN); LI, Ping, Foshan, Guangdong 528311 (CN)
(74) Representative: Grünecker Patent- und Rechtsanwälte PartG mbB
(86) International application number: PCT/CN2018/120107
(87) International publication number: WO 2020/024504

(56) References cited:
- EP-A1- 3 178 983
- CN-A- 101 225 594
- CN-A- 101 255 643
- CN-A- 106 757 995
- CN-A- 106 757 995
- CN-A- 106 948 129
- CN-U- 206 127 666
- JP-A- H02 224 795
- KR-B1- 100 720 540

## Description

### FIELD

The present disclosure relates to the technical field of washing machines, and more particularly to a drive system of a washing machine and a drum washing machine having same.

### BACKGROUND

In order to improve the cleaning ability of washing machines, pulsators are generally arranged at the bottom of drums of the washing machines. During washing, the drums and the pulsators operate relatively at different speeds, and friction among the clothes can be increased, thereby improving the cleaning performance. A dual-power drum washing machine is disclosed in the related art, which is driven by an outer rotor DD (Direct Driver) motor (outer rotor linear motor). In the dual-power drum washing machine, the rotor is directly fixedly connected with a pulsator through a pulsator shaft and operates at the same speed; a sun gear fixedly connected to the pulsator shaft transmits power to a drum shaft in a constant speed ratio through a planetary gear, to realize operation of the pulsator and the drum in the same direction and at different speeds. In order to reduce compression in axial size and realize a mounting function, this structure requires a split design of front and rear bearing brackets, a gear box is arranged between a front bearing and a rear bearing, and then the front bearing bracket and the rear bearing bracket are connected together by assembly. In addition, the dual-power drum washing machine in the related art generally fixes the rotor on the pulsator shaft which is a slender shaft and may cause problems such as insufficient rigidity. Moreover, this design scheme completely changes the assembly method and connection relationship of a drive system of traditional drum washing machines, which is a great change to the design of the whole machine, and may have problems such as more parts, difficult assembly, and low axial space utilization.

In addition, compared with traditional BLDC (brushless direct current) inner rotor motors, the outer rotor DD motor requires a large starting torque, and has a considerable difference in speed during washing and dewatering, causing high energy consumption and costs.

KR 100 720 540 B1 is directed to an apparatus for driving a washing machine according to the preamble of claim 1. The washing machine has an outer tank, a washing tub and laundry wings. The washing tub and the laundry wings are rotatably installed within the outer tank. A motor is attached to the underside of the tank and drives via a belt a clutch pulley. The pulley is formed on an outer circumference of a gear housing. Depending on the position of the clutch, the pulley transmits a torque to shaft connected to the laundry wings and a transmission sleeve connected to the washing tub. Inside the gear housing a planetary gear is positioned. A sun gear is attached to the housing. The planetary wheels are rotatably attached to the shaft via a carrier and a gear ring that meshes with the planetary wheels is connected to the sleeve. The clutch is selectively movable by solenoid and compression spring. In a first state (solenoid is off) the clutch body connects the sleeve with the gear housing. In this position, the shaft and the sleeve rotate at the same speed. If the solenoid is energized, clutch body moves upwards and is coupled with the tank. In this state the sleeve is fixed to the tank, the gear housing is free to rotate and only the shaft is rotated. Due to the planetary gear, the shaft rotates by reduced speed.

CN 106 757 995 A refers to a driving mechanism for a washing machine. The driving mechanism includes a variable-pole transformer, a planetary gear train connecting a motor and the washing machine barrel and a pulsator, a clutch assembly, and a mounting bracket. The variable-pole transformer includes a stator, a first rotor portion, and a second rotor portion. The planetary gear train includes a sun gear, a plurality of planetary gears, a ring gear, and a carrier. The input shaft is fixedly connected to the first rotor portion by splines. An output shaft is fixedly connected to the carrier of the planetary gear train and the other end of the output shaft is connected to a washing machine barrel. The ring gear is fixedly connected to the second rotor portion and to a dewatering sleeve that is connected with the barrel of the washing machine. The ring gear is provided with a clutch spline engaging with spline teeth of the clutch assembly. The clutch assembly includes a return spring and an electromagnetic coil. When the electromagnetic coil is energized, the clutch assembly is slid down along the splines of the gear ring and engages with the first rotor portion. The first rotor portion and the second rotor portion are thus coupled and the input shaft and the gear ring are integrally connected to synchronously rotate output shaft and dewatering sleeve. When the electromagnetic coil is de-energized, the clutch assembly is urged upwards by the spring and thus engages with a mounting bracket to fix the second rotor portion. The second rotor portion and the stator simultaneously provide excitation to achieve a large torque output of the first rotor portion and to rotate the output shaft and the sleeve at different speeds.

EP 3 278 983 B1 refers to a washing machine having a drum, a wing body located within the drum and a driving part. The driving part includes a driving motor, a first rotating shaft, a second rotating shaft, a bearing unit, a wing speed-reducing mechanism, a drum speed-reducing mechanism and a clutch mechanism. First rotating shaft has a sleeve form and the second rotating shaft extends through the first rotating shaft. The front part of the second rotating shaft is connected to the wing body and the front end of the first rotating shaft is connected to the drum. The speed-reducing mechanism includes wing belt wheel, a first motor belt wheel and a wing transmission belt. The drum speed-reducing mechanism includes drum belt wheel, a second motor belt wheel and a drum transmission belt. The clutch mechanism switches between a bi-axial driving form and a uni-axial driving form. In the bi-axial driving form the drum and the body rotate at different rotating speeds. In the uni-axial driving form the drum and the body rotate at the same rotating speed. In the bi-axial driving form the clutch couples the second rotating shaft with the wing belt wheel and in the uni-axial driving form the clutch couples the second rotating shaft with the drum belt wheel.

### SUMMARY

The present disclosure aims to solve at least one of the problems existing in the related art. Therefore, the present disclosure provides a drive system of a washing machine according to claim 1. On the premise of realizing a dual-output function, the drive system for the washing machine has low cost and energy consumption, good rigidity and strength, simple structure, and few design changes, is easy to assemble, and occupies a small axial space of the washing machine.

The present disclosure also provides a washing machine having the above drive system.

For a drive system of a washing machine according to embodiments of the present disclosure, the washing machine includes the drive system, an outer tub, a drum, and a pulsator. The drum is rotatably arranged within the outer tub, and the pulsator is rotatably arranged at a bottom of the drum. The drive system includes: a pulsator shaft having a first end connected to the pulsator; a drum shaft sleeve fitted over an outer periphery of the pulsator shaft that is rotatable relative to the drum shaft sleeve, a first end of the drum shaft sleeve being connected to the drum; a bracket component, the drum shaft sleeve being arranged on the bracket component and rotatable relative to the bracket component, and the bracket component being connected to the outer tub; a motor; a belt transmission mechanism configured to transmit power of the motor to the drum shaft sleeve and drive the drum shaft sleeve to rotate; a gear transmission mechanism, through which a second end of the pulsator shaft is connected to the belt transmission mechanism; and a clutch mechanism configured to cooperate with one of the gear transmission mechanism and the bracket component, wherein in a configuration where the clutch mechanism cooperates with the gear transmission mechanism, the pulsator shaft and the drum shaft sleeve rotate synchronously; wherein in a configuration where the clutch mechanism cooperates with the bracket component, the pulsator shaft and the drum shaft sleeve rotate at different speeds.

For the drive system for the washing machine according to embodiments of the present disclosure, by configuring the motor as an inner rotor motor, and transmitting the power of the motor to the inner gear ring through the belt and the belt pulley, on the premise of ensuring the starting torque of the washing machine, the cost and energy consumption of the motor can be reduced, which is advantageous to reducing the cost and energy consumption of the drive system. Compared with the traditional art where motors are fixed on motor shafts, the belt pulley is connected to a second end of the drum shaft sleeve, which is advantageous to improving the rigidity of the drive system, and reducing the axial size of the drive system. In addition, when the clutch mechanism cooperates with the gear transmission mechanism, the pulsator shaft and the drum shaft sleeve rotate synchronously; when the clutch mechanism cooperates with the bracket component, the pulsator shaft and the drum shaft sleeve rotate at different speeds. As a result, the pulsator shaft and the drum shaft sleeve can be switched between two modes of the synchronous rotation and the differential rotation, to allow the washing machine to adapt to clothes of different materials.

In some embodiments of the present disclosure, the belt pulley has a central hole formed with a first spline portion on an inner peripheral wall of the central hole, the second end of the drum shaft sleeve has a belt pulley connecting portion fitted in the central hole, and the belt pulley connecting portion is formed with a second spline portion cooperating with the first spline portion.

In some embodiments of the present disclosure, the bracket component includes a bearing bracket and a rear housing connected with each other; the bearing bracket is provided with a bearing fitted over an outer periphery of the drum shaft sleeve; the rear housing is arranged at an axial side of the bearing bracket; an accommodating space is defined between the bearing bracket and the rear housing; and the belt transmission mechanism, the gear transmission mechanism, and the clutch mechanism are located within the accommodating space.

In some embodiments of the present disclosure, the bearing bracket is an integrally formed member.

In some optional embodiments of the present disclosure, the rear housing is formed with an avoidance notch on an outer peripheral wall of the rear housing, and one end of the belt passes through the avoidance notch and is fitted over the outer peripheral side of the output shaft.

In some embodiments of the present disclosure, the gear transmission mechanism includes: an inner gear ring connected to and arranged coaxially with the belt pulley, wherein when the clutch mechanism cooperates with the inner gear ring, the pulsator shaft and the drum shaft sleeve rotate synchronously; a sun gear connected to and arranged coaxially with the pulsator shaft, and located at an inner side of the inner gear ring; a planetary carrier component having a plurality of planetary gear shafts, and fitted over the outer periphery of the pulsator shaft and rotatable relative to the pulsator shaft; and a plurality of planetary gears rotatably fitted over the plurality of planetary gear shafts correspondingly, located between the inner gear ring and the sun gear, arranged around an outer periphery of the sun gear, and meshing with the inner gear ring and the sun gear.

In some embodiments of the present disclosure, the plurality of planetary gears form one group, and each planetary gear directly meshes with the inner gear ring and the sun gear.

In some optional embodiments of the present disclosure, the plurality of planetary gears form two groups meshing with each other, and one of the two groups of planetary gears meshes with the gear ring while the other group meshes with the sun gear.

Optionally, an inner peripheral wall of the second end of the drum shaft sleeve is formed with an avoidance groove penetrating an axial end face of the second end of the drum shaft sleeve, a part of the planetary carrier component is accommodated within the avoidance groove, and the planetary carrier component is spaced apart from the drum shaft sleeve.

In some optional embodiments of the present disclosure, the inner gear ring is integrally formed on the belt pulley by injection molding.

In some optional embodiments of the present disclosure, the clutch mechanism includes: a clutch sliding sleeve formed with a third spline portion on an inner peripheral wall of the clutch sliding sleeve, wherein the planetary carrier component includes a planetary carrier and a cover plate connected with each other; the inner gear ring is rotatably arranged between an outer peripheral wall of the planetary carrier and an inner peripheral wall of the cover plate; a mounting space is defined between the planetary carrier and the cover plate; the sun gear and the plurality of planetary gears are located within the mounting space; an outer peripheral wall of the cover plate is formed with a fourth spline portion cooperating with the third spline portion; and the clutch sliding sleeve is slidable between a first position and a second position along an axial direction relative to the cover plate; an electromagnetic coil component adapted to drive the clutch sliding sleeve to slide towards a first direction along the axial direction when the electromagnetic coil component is energized; and a clutch spring configured to drive the clutch sliding sleeve to slide towards a second direction opposite to the first direction, wherein when the clutch sliding sleeve slides towards the first direction to the first position, the clutch sliding sleeve cooperates with the inner gear ring; when the clutch sliding sleeve slides towards the second direction to the second position, the clutch sliding sleeve cooperates with the bracket component.

In some optional embodiments of the present disclosure, the clutch spring is arranged between the bracket component and the clutch sliding sleeve.

In some embodiments of the present disclosure, the clutch spring is arranged between the belt pulley and the clutch sliding sleeve.

In some optional embodiments of the present disclosure, a first axial end face of the clutch sliding sleeve is formed with a plurality of first clutch teeth arranged along a peripheral direction; the inner gear ring is formed with a plurality of second clutch teeth meshing with the plurality of first clutch teeth; a second axial end face of the clutch sliding sleeve is formed with a plurality of third clutch teeth arranged along the peripheral direction; and the bracket component is formed with a plurality of fourth clutch teeth meshing with the plurality of third clutch teeth.

In some embodiments of the present disclosure, the first clutch teeth and the third clutch teeth are each formed in a step shape in the axial direction of the clutch sliding sleeve.

A drum washing machine according to embodiments of the present disclosure includes: an outer tub; a drum rotatably arranged within the outer tub; a pulsator rotatably arranged at a bottom of the drum; and the above drive system, wherein the first end of the pulsator shaft is connected to the pulsator, the first end of the drum shaft sleeve is connected to the drum, and the bracket component is connected to the outer tub.

For the drum washing machine according to the embodiments of the present disclosure, by providing the above drive system, and in turn by configuring the motor as the inner rotor motor and transmitting the power of the motor to the inner gear ring by the belt and the belt pulley, on the premise of ensuring the starting torque of the washing machine, the cost and energy consumption of the motor can be reduced, which is advantageous to reducing the cost and energy consumption of the drive system. Compared with the traditional art where motors are fixed on motor shafts, the belt pulley is connected to the second end of the drum shaft sleeve, which is advantageous to improving the rigidity of the drive system, and reducing the axial size of the drive system. In addition, when the clutch mechanism cooperates with the gear transmission mechanism, the pulsator shaft and the drum shaft sleeve rotate synchronously; when the clutch mechanism cooperates with the bracket component, the pulsator shaft and the drum shaft sleeve rotate at different speeds. As a result, the pulsator shaft and the drum shaft sleeve can be switched between two modes of the synchronous rotation and the differential rotation, to allow the washing machine to adapt to clothes of different materials.

### BRIEF DESCRIPTION OF THE DRAWINGS

The above and/or additional aspects and advantages of the present disclosure will become apparent and more readily appreciated from the following description of embodiments with reference to the drawings, in which:
FIG. 1 is a schematic view of a drive system according to an embodiment of the present disclosure;
FIG. 2 is an exploded view of a drive system according to an embodiment of the present disclosure;
FIG. 3 is a sectional view of a drive system according to an embodiment of the present disclosure;
FIG. 4 is a rear view of a drive system according to an embodiment of the present disclosure;
FIG. 5 is a schematic view of a drum shaft sleeve according to an embodiment of the present disclosure;
FIG. 6 is a schematic view of a pulsator shaft according to an embodiment of the present disclosure;
FIG. 7 is a schematic view of a clutch sliding sleeve according to an embodiment of the present disclosure;
FIG. 8 is a schematic view of a planetary carrier according to an embodiment of the present disclosure;
FIG. 9 is a schematic view of a cover plate according to an embodiment of the present disclosure;
FIG. 10 is a schematic view of an inner gear ring according to an embodiment of the present disclosure; and
FIG. 11 is a schematic view of the assembly relationship of a gear transmission component according to an embodiment of the present disclosure.

### DETAILED DESCRIPTION OF EMBODIMENTS

Embodiments of the present disclosure will be described in detail below, and the examples of the embodiments will be illustrated in the drawings. The same or similar elements and the elements having same or similar functions are denoted by like reference numerals throughout the description. The embodiments described herein with reference to the drawings are illustrative and used to generally understand the present disclosure. The embodiments shall not be construed to limit the present disclosure.

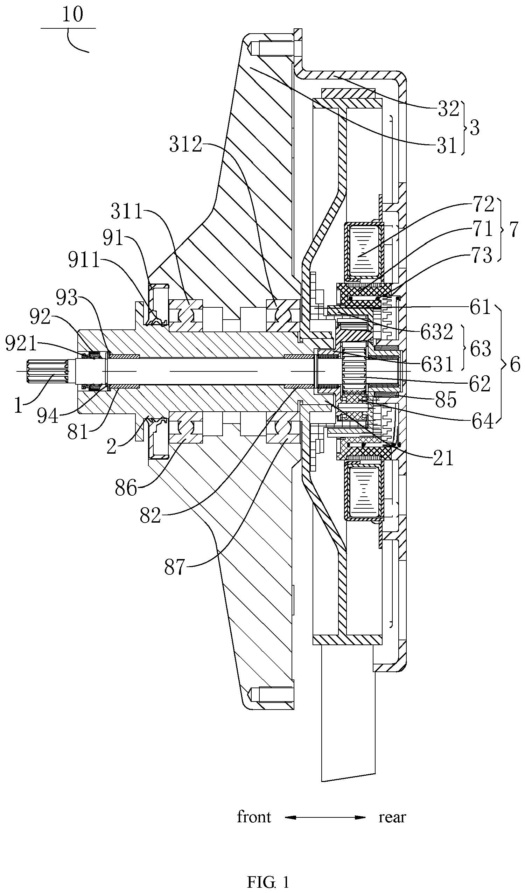

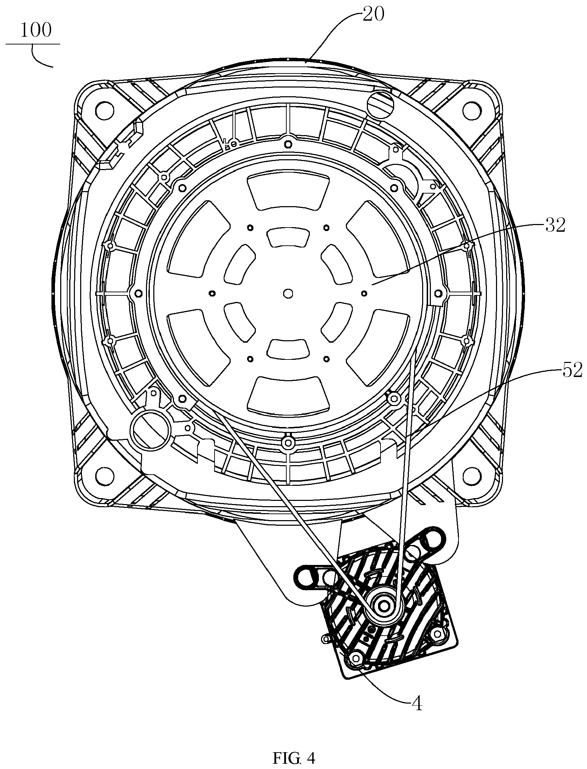

A drive system 10 of a washing machine 100 according to embodiments of the present disclosure will be described below with reference to FIGS. 1 to 11.

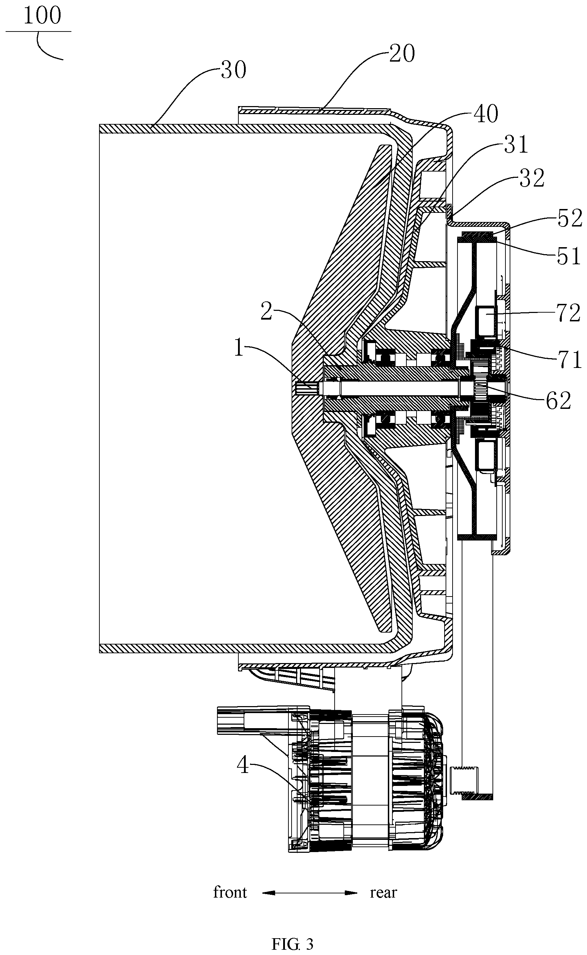

As illustrated in FIGS. 1 to 4, for the drive system 10 of the washing machine 100 according to embodiments of the present disclosure, the washing machine 100 includes the drive system 10, an outer tub 20, a drum 30, and a pulsator 40. The drum 30 is rotatably arranged within the outer tub 20, and the pulsator 40 is rotatably arranged at a bottom of the drum 30, wherein the bottom of the drum 30 is opposite to an opening of the drum 30. For example, as illustrated in FIG. 3, the drum 30 has a washing chamber therein, a front of the washing chamber is formed with an opening, and the pulsator 40 is rotatably arranged at a rear of the washing chamber.

As illustrated in FIGS. 1 to 4, the drive system 10 can include a pulsator shaft 1, a drum shaft sleeve 2, a bracket component 3, a motor 4, a belt transmission mechanism 5, a gear transmission mechanism 6, and a clutch mechanism 7.

Referring to FIG. 3, a first end of the pulsator shaft 1 (for example, a front end illustrated in FIG. 3) is adapted to be connected to the pulsator 40; the drum shaft sleeve 2 is fitted over an outer periphery of the pulsator shaft 1; the pulsator shaft 1 is rotatable relative to the drum shaft sleeve 2 to drive the pulsator 40 to rotate; a first end of the drum shaft sleeve 2 (for example, a rear end illustrated in FIG. 3) is adapted to be connected to the drum 30; and the drum shaft sleeve 2 can drive the drum 30 to rotate.

Referring to FIG. 3, the drum shaft sleeve 2 is arranged on the bracket component 3 and is rotatable relative to the bracket component 3; the bracket component 3 is adapted to be connected to the outer tub 20; the motor 4 is an inner rotor motor and is adapted to be connected to the outer tub 20. Therefore, it is advantageous to reducing the cost and energy consumption of the motor 4. For example, the motor 4 is a BLDC inner rotor motor (brushless direct current inner rotor motor).

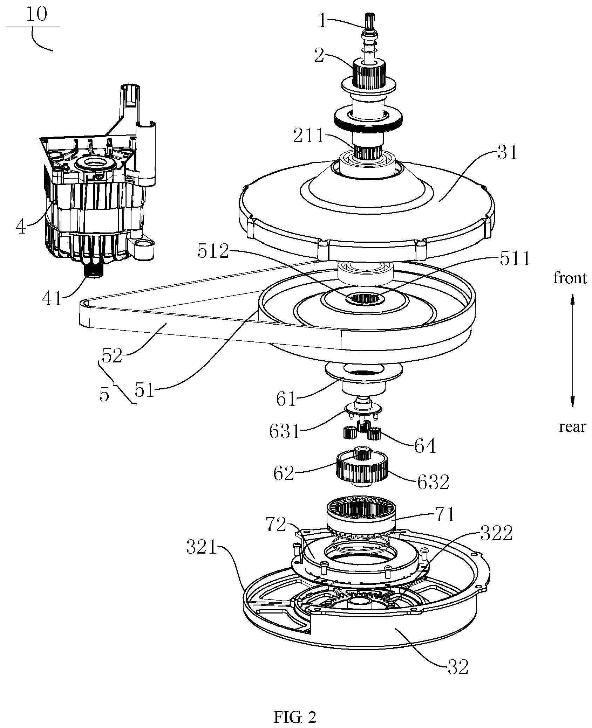

As illustrated in FIG. 2, the belt transmission mechanism 5 includes a belt pulley 51 and a belt 52. One end of the belt 52 is fitted over an outer peripheral side of an output shaft 41 of the motor 4, while the other end of the belt 52 is fitted over an outer peripheral side of the belt pulley 51. The belt pulley 51 is connected to a second end of the drum shaft sleeve 2. A second end of the pulsator shaft 1 is connected to the belt transmission mechanism 5 through the gear transmission mechanism 6. When the motor is working, the belt transmission mechanism 5 transmits power of the motor 4 to the drum shaft sleeve 2 to drive the drum shaft sleeve 2 to rotate; at the same time, the belt transmission mechanism 5 transmits the power of the motor 4 to the gear transmission mechanism 6, and in turn to the pulsator shaft 1 through the gear transmission mechanism 6, thereby driving the pulsator shaft 1 to rotate.

It can be appreciated that the pulsator shaft 1 is a slender shaft, and a diameter of the drum shaft sleeve 2 is greater than a diameter of the pulsator shaft 1. Compared with the traditional art where a rotor of a motor is directly fixed on a pulsator shaft, by connecting the belt pulley 51 to the second end of the drum shaft sleeve 2, the rigidity of the drive system 10 can be enhanced, and the belt pulley 51 occupies a smaller space in a length direction of the pulsator shaft 1 than the motor 4, which is advantageous to reducing an axial size of the drive system 10. In addition, the power of the motor 4 is transmitted to the gear transmission mechanism 6 through the belt 52 and the belt pulley 51, which can reduce the rotation speed and increase the torque, thereby ensuring a starting torque of the washing machine 100.

As illustrated in FIGS. 1 and 2, the clutch mechanism 7 selectively cooperates with one of the gear transmission mechanism 6 and the bracket component 3. When the clutch mechanism 7 cooperates with the gear transmission mechanism 6, the pulsator shaft 1 and the drum shaft sleeve 2 rotate synchronously. When the clutch mechanism 7 cooperates with the bracket component 3, the pulsator shaft 1 and the drum shaft sleeve 2 rotate at different speeds. "The synchronous rotation of the pulsator shaft 1 and the drum shaft sleeve 2" means that the pulsator shaft 1 and the drum shaft sleeve 2 rotate in the same direction and at the same angular speed, and "differential rotation of the pulsator shaft 1 and the drum shaft sleeve 2" means that the pulsator shaft 1 and the drum shaft sleeve 2 rotate at different angular speeds, wherein the differential rotation can be in the same direction or in the opposite directions. Therefore, the pulsator shaft 1 and drum shaft sleeve 2 can be switched between one washing mode of the synchronous rotation and another washing mode of the differential rotation. In a washing condition, by controlling whether the pulsator shaft 1 and the drum shaft sleeve 2 rotate at different speeds, it is possible to control whether the drum 30 and the pulsator 40 rotate at different speeds (i.e., switching between a dual-output washing mode and a single-output washing mode), such that the washing machine 100 can adapt to clothes of different materials. For example, during washing, the washing machine 100 can be switched to the single-output washing state (with the pulsator shaft 1 and the drum shaft sleeve 2 rotating synchronously), and in such a case, the washing machine 100 has the advantage of not damaging the clothes, and can wash clothes that need gentle washing such as cashmere or silk. When the washing machine 100 is switched to the dual-output washing state (with the pulsator shaft 1 and the drum shaft sleeve 2 rotating differentially), the washing machine 100 has a strong washing capacity, and can wash clothes with stubborn stains or clothes made of washable materials.

For the drive system 10 of the washing machine 100 according to the embodiments of the present disclosure, by configuring the motor 4 as the inner rotor motor, and transmitting the power of the motor 4 to the inner gear ring 61 through the belt 52 and the belt pulley 51, on the premise of ensuring the starting torque of the washing machine 100, the cost and energy consumption of the motor 4 can be reduced, which is advantageous to reducing the cost and energy consumption of the drive system 10. Compared with the traditional art where motors are fixed on motor shafts, the belt pulley 51 is connected to the second end of the drum shaft sleeve 2, which is advantageous to improving the rigidity of the drive system 10, and reducing the axial size of the drive system. In addition, when the clutch mechanism 7 cooperates with the gear transmission mechanism 6, the pulsator shaft 1 and the drum shaft sleeve 2 rotate synchronously; when the clutch mechanism 7 cooperates with the bracket component 3, the pulsator shaft 1 and the drum shaft sleeve 2 rotate at different speeds. As a result, the pulsator shaft 1 and the drum shaft sleeve 2 can be switched between two modes of the synchronous rotation and the differential rotation, to allow the washing machine 100 to adapt to clothes of different materials.

In some embodiments of the present disclosure, as illustrated in FIG. 2, the belt pulley 51 has a central hole 511 with a first spline portion 512 formed on an inner peripheral wall of the central hole 511. The second end of the drum shaft sleeve 2 has a belt pulley connecting portion 21 fitted in the central hole 511, and the belt pulley connecting portion 21 is formed with a second spline portion 211 cooperating with the first spline portion 512. Therefore, through the cooperation between the first spline portion 512 on the inner peripheral wall of the central hole 511 and the second spline portion 211 of the belt pulley connecting portion 21, it is advantageous to improving the strength of connection between the belt pulley 51 and the drum shaft sleeve 2, thereby enhancing the stability of operation of the belt pulley 51 driving the drum shaft sleeve 2.

In some embodiments of the present disclosure, as illustrated in FIGS. 1 and 2, the bracket component 3 includes a bearing bracket 31 and a rear housing 32 connected with each other. The bearing bracket 31 is provided with a bearing thereon, and the bearing is fitted over an outer periphery of the drum shaft sleeve 2. The rear housing 32 is arranged at an axial side of the bearing bracket 31. An accommodating space is defined between the bearing bracket 31 and the rear housing 32, and the belt transmission mechanism 5, the gear transmission mechanism 6, and the clutch mechanism 7 are located within the accommodating space. Therefore, the belt transmission mechanism 5, the gear transmission mechanism 6, and the clutch mechanism 7 are isolated from the external environment, which is beneficial to improving the operational stability of the belt transmission mechanism 5, the gear transmission mechanism 6, and the clutch mechanism 7.

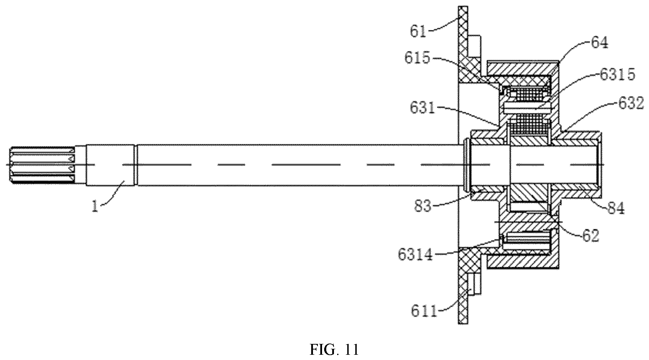

For example, as illustrated in FIG. 1, the bearing bracket 31 is fixedly connected to the outer tub 20, and a front end and a rear end of an inner hole of the bearing bracket are provided with a first bearing chamber 311 and a second bearing chamber 312, respectively. Outer rings of a first bearing 86 and a second bearing 87 are fixedly mounted within the first bearing chamber 311 and the second bearing chamber 312, respectively. The drum shaft sleeve 2 is rotatably mounted in the inner hole of the bearing bracket 31 through the first bearing 86 and the second bearing 87. The rear end of the drum shaft sleeve 2 is provided with the belt pulley connecting portion 21. The belt pulley 51 with an opening backward is fixedly connected to the belt pulley connecting portion 21. The drum shaft sleeve 2 is of a hollow structure. Referring to FIGS. 1 and 11, the pulsator shaft 1 is rotatably arranged in the drum shaft sleeve 2 through a first bushing 81 and a second bushing 82 press-fitted in an inner hole of the drum shaft sleeve 2.

In some embodiments of the present disclosure, the bearing bracket 31 is an integrally formed member. Therefore, it is beneficial to improving the supporting rigidity of the bearing bracket 31.

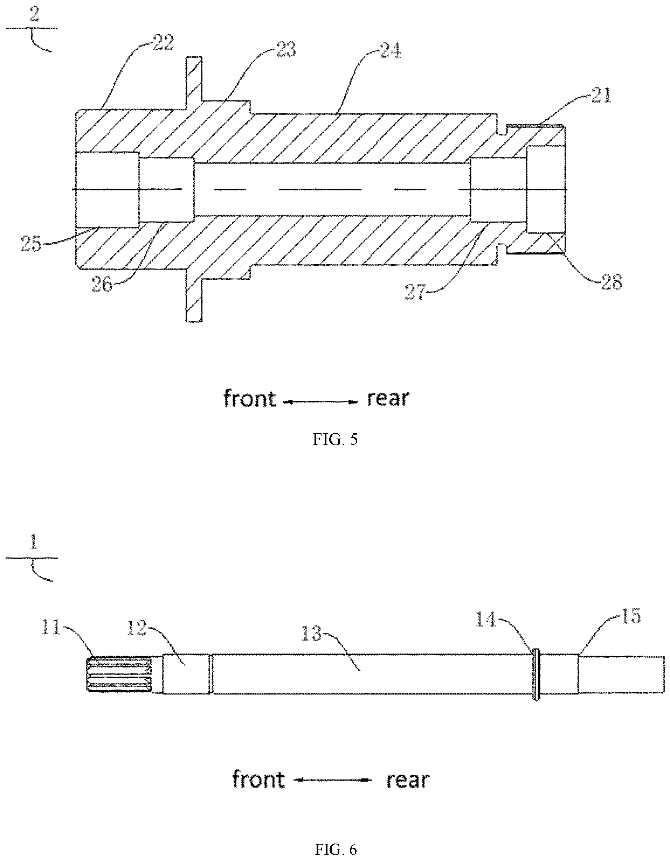

In some embodiments of the present disclosure, as illustrated in FIG. 6, the drum shaft sleeve 2 is a hollow rotating structure; an outer peripheral wall of the drum shaft sleeve 2 is provided with a drum connecting portion 22, a large oil seal connecting portion 23, a bearing mounting portion 24, and a belt pulley connecting portion 21 in sequence from front to rear; and the inner hole of the drum shaft sleeve 2 is provided with a small oil seal mounting portion 25, a first bushing mounting portion 26, a second bushing mounting portion 27, and an avoidance groove 28 in sequence from front to rear. During assembly, referring to FIG. 1, the drum shaft sleeve 2 is fitted into a bearing hole from an end of the first bearing 86; the bearing mounting portion 24 is mounted in inner holes of the first bearing 86 and the second bearing 87, so that the drum shaft sleeve 2 is rotatably mounted within the bearing bracket 31; a front end of the drum shaft sleeve 2 is fixedly connected to the drum 30 through the drum connecting portion 22, and the belt pulley connecting portion 21 located at the rear end of the drum shaft sleeve 2 is fixedly connected to the belt pulley 51.

Further, the pulsator shaft 1 is provided with a pulsator connecting portion 11, a small oil seal connecting portion 12, a bushing mounting portion 13, a first shaft shoulder 14, and a second shaft shoulder 15 in sequence from front to rear. The pulsator shaft 1 is rotatably supported in the inner hole of the drum shaft sleeve 2 through the first bushing 81 and the second bushing 82, and the pulsator shaft 1 is forwardly limited to the second bushing 82 by the first shaft shoulder 14. A side of the pulsator shaft 1 where the first bushing 81 is exposed is equipped with an adjusting washer 93 for adjusting a axial movement between the pulsator shaft 1 and the drum shaft sleeve 2. Moreover, the pulsator shaft 1 is backwardly limited to the first bushing 81 by an elastic retaining ring 94 arranged at a front end of the adjusting washer 93. The front end of the pulsator shaft 1 is fixedly connected to the pulsator 40 through the pulsator connecting portion 11, and a rear end of the pulsator shaft 1 is fixedly connected with a sun gear 62 and limited to the second shaft shoulder 15. Therefore, the operation of the pulsator shaft 1 can be made stable and reliable.

In some embodiments of the present disclosure, seals are provided among the bearing bracket 31, the drum shaft sleeve 2, and the pulsator shaft 1, and the seals include a large water seal 91 and a small water seal 92. The large water seal 91 is fixedly mounted in an inner hole of a front end of the bearing bracket 31 and is inwardly sealed and connected with the drum shaft sleeve 2. The small water seal 92 is fixedly mounted in an inner hole of the front end of the drum shaft sleeve 2 and is inwardly sealed and connected with the pulsator shaft 1. Specifically, as illustrated in FIG. 1, the large water seal 91 is fixed at the front end of the bearing bracket 31, and a first sealing lip 911 is provided in the inner hole of the bearing bracket 31 and abuts against the large oil seal connecting portion 23 of the drum shaft sleeve 2; an outer ring of the small water seal 92 is fixedly connected to the small oil seal mounting portion 25 of the drum shaft sleeve 2, and the small water seal 92 is inwardly provided with a third sealing lip 921 which abuts against the small oil seal connecting portion 12 of the pulsator shaft 1.

In some optional embodiments of the present disclosure, as illustrated in FIG. 2, an outer peripheral wall of the rear housing 32 is formed with an avoidance notch 321, and one end of the belt 52 passes through the avoidance notch 321 and is fitted over the outer peripheral side of the output shaft 41. Therefore, by providing the avoidance notch 321, it is convenient for two ends of the belt 52 to be connected to the output shaft 41 and the belt pulley 51 respectively, and interference between the belt 52 and the rear housing 32 can be avoided. For example, the motor 4 is fixedly connected to the outer tub 20, and a shaft of the motor 4 is parallel to the pulsator shaft 1; one end of the belt 52 is fitted over the outer peripheral side of the output shaft 41 of the motor 4, while the other end of the belt 52 is fitted over the outer peripheral side of the belt pulley 51; the rear housing 32 with an opening forward is fixedly connected to a rear end face of the bearing bracket 31 and fitted over the belt 52 without contact; one side of the rear housing 32 is provided with the avoidance notch 321 adapted to avoid the belt 52, and the belt 52 passes through the avoidance notch 321 and is connected to the motor 4.

In some embodiments of the present disclosure, as illustrated in FIGS. 2 and 11, the gear transmission mechanism 6 includes: an inner gear ring 61, a sun gear 62, a planetary carrier component 63, and a planetary gear 64. The inner gear ring 61 is connected to and arranged coaxially with the belt pulley 51. When the clutch mechanism 7 cooperates with the inner gear ring 61, the pulsator shaft 1 and the drum shaft sleeve 2 rotate synchronously. The sun gear 62 is connected to and arranged coaxially with the pulsator shaft 1, and the sun gear 62 is located at an inner side of the inner gear ring 61. The planetary carrier component 63 has a plurality of planetary gear shafts 6315, and the planetary carrier component 63 is fitted over the outer periphery of the pulsator shaft 1 and is rotatable relative to the pulsator shaft 1. A plurality of the planetary gears 64 are provided and rotatably fitted over the plurality of planetary gear shafts 6315 correspondingly. The plurality of the planetary gears 64 are located between the inner gear ring 61 and the sun gear 62 and arranged around an outer periphery of the sun gear 62. The planetary gears 64 mesh with the inner gear ring 61 and the sun gear 62.

It should be noted that when the clutch mechanism 7 cooperates with the inner gear ring 61, the planetary carrier component 63 is fixedly connected to the inner gear ring 61, so that the inner gear ring 61, the planetary carrier component 63, the planetary gear 64, the sun gear 62, and the pulsator shaft 1 run at the same angular speed. Moreover, since both the inner gear ring 61 and the drum shaft sleeve 2 are connected to and arranged coaxially with the belt pulley 51, the pulsator shaft 1 and the drum shaft sleeve 2 rotate synchronously. When the clutch mechanism 7 cooperates with the bracket component 3, the planetary carrier component 63 is fixedly connected to the bracket component 3, the belt transmission mechanism 5 transmits the power of the motor 4 to the drum shaft sleeve 2 to drive the drum shaft sleeve 2 to rotate. At the same time, the belt transmission mechanism 5 transmits the power of the motor 4 to the inner gear ring 61, and in turn the inner gear ring 61 drives the planetary gear 64 to rotate around the planetary gear shaft 6315; the planetary gear 64 drives a central gear to rotate, and the central gear drives the pulsator shaft 1 to rotate; the pulsator shaft 1 and the drum shaft sleeve 2 rotate at different speeds. Thus, the structure is simple, and it is convenient for the pulsator shaft 1 and the drum shaft sleeve 2 to realize the synchronous rotation and the differential rotation.

In some embodiments of the present disclosure, as illustrated in FIG. 2, the plurality of planetary gears 64 form a group, and each planetary gear 64 directly meshes with the inner gear ring 61 and the sun gear 62. Therefore, when the clutch mechanism 7 cooperates with the bracket component 3, the pulsator shaft 1 and the drum shaft sleeve 2 can rotate in reverse directions and at different speeds.

In some optional embodiments of the present disclosure, the plurality of planetary gears 64 form two groups that mesh with each other. One of the two groups of the planetary gears 64 meshes with the inner gear ring 61, and the other group meshes with the sun gear 62. Therefore, when the clutch mechanism 7 cooperates with the bracket component 3, the pulsator shaft 1 and the drum shaft sleeve 2 rotate in the same direction and at different speeds. For example, the plurality of planetary gears 64 are divided into a first group of planetary gears and a second group of planetary gears; the first group of planetary gears are arranged adjacent to a center of the inner gear ring 61 and mesh with the sun gear 62; the second group of planetary gears are arranged away from the center of the inner gear ring 61 and mesh with the inner gear ring 61 and the first group of planetary gears.

In some embodiments of the present disclosure, as illustrated in FIG. 6, an inner peripheral wall of the second end of the drum shaft sleeve 2 is formed with the avoidance groove 28 that penetrates an axial end face of the second end of the drum shaft sleeve 2, a part of the planetary carrier component 63 is accommodated in the avoidance groove 28, and the planetary carrier component 63 is spaced from the drum shaft sleeve 2. Therefore, it is beneficial to reducing the axial size of the drive system 10.

In some optional embodiments of the present disclosure, as illustrated in FIG. 1, the inner gear ring 61 is integrally formed on the belt pulley 51 by injection molding. Therefore, an integrated injection molding structure can not only ensure the structure and performance stability of the inner gear ring 61 and the belt pulley 51, but also omit redundant assembly parts and connection processes, the efficiency of assembly between the inner gear ring 61 and the belt pulley 51 can be improved greatly, and the reliability of connection between the inner gear ring 61 and the belt pulley 51 can be ensured.

In some embodiments of the present disclosure, as illustrated in FIGS. 1, 2, and 7, the clutch mechanism 7 includes a clutch sliding sleeve 71, an electromagnetic coil component 72, and a cultch spring 73. An inner peripheral wall of the clutch sliding sleeve 71 is formed with a third spline portion 711. The planetary carrier component 63 includes a planetary carrier 631 and a cover plate 632 connected to each other. The inner gear ring 61 is rotatably arranged between an outer peripheral wall of the planetary carrier 631 and an inner peripheral wall of the cover plate 632. A mounting space is defined between the planetary carrier 631 and the cover plate 632, and the sun gear 62 and the plurality of planetary gears 64 are located in the mounting space. An outer peripheral wall of the cover plate 632 is formed with a fourth spline portion 6321 cooperating with the third spline portion 711. The clutch sliding sleeve 71 is slidable between a first position and a second position along an axial direction relative to the cover plate 632. Therefore, through the cooperation between the third spline portion 711 and the fourth spline portion 6321, on the one hand, the movement of the clutch sliding sleeve 71 relative to the cover plate 632 along the axial direction can be guided, and on the other hand, the clutch sliding sleeve 71 cannot rotate relative to the cover plate 632, so that the sliding of the clutch sliding sleeve 71 between the first position and the second position along the axial direction is stable and reliable. For example, the planetary carrier 631 and the cover plate 632 are fixedly connected by a support column 6311 and a support column through-hole 6323.

Further, when the electromagnetic coil component 72 is energized, the electromagnetic coil component 72 is adapted to drive the clutch sliding sleeve 71 to slide towards a first direction (for example, a front direction as illustrated in FIG. 1) along the axial direction, and the clutch spring 73 is used to drive the clutch sliding sleeve 71 to slide towards a second direction (for example, a rear direction as illustrated in FIG. 1) opposite to the first direction. When the clutch sliding sleeve 71 slides towards the first direction to the first position, the clutch sliding sleeve 71 cooperates with the inner gear ring 61; when the clutch sliding sleeve 71 slides towards the second direction to the second position (a position of the clutch sliding sleeve 71 as illustrated in FIG. 1), the clutch sliding sleeve 71 cooperates with the carrier assembly 3. Therefore, the sliding of the clutch sliding sleeve 71 can be stable and reliable, and when the clutch sliding sleeve 71 cooperates with the inner gear ring 61, the synchronous rotation of the pulsator shaft 1 and the drum shaft sleeve 2 can be realized; when the clutch sliding sleeve 71 cooperates with the carrier assembly 3, the differential rotation of the pulsator shaft 1 and the drum shaft sleeve 2 can be realized.

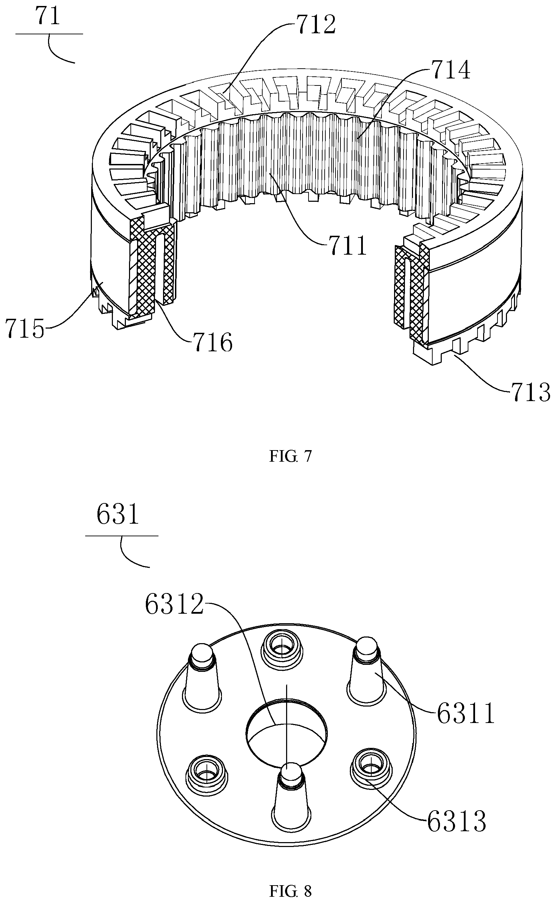

In some embodiments of the present disclosure, as illustrated in FIG. 7, the clutch sliding sleeve 71 includes a non-magnetically conductive tooth-shaped member 714 and a magnetically conductive sleeve 715 cooperating with each other in a radial direction and integrally formed, and the magnetically conductive sleeve 715 is arranged on an outer ring of the non-magnetically conductive tooth-shaped member 714. An outer ring of the cover plate 632 is fixedly provided with the fourth spline portion 6321, and the clutch sliding sleeve 71 is axially slidably fitted over an outer side of the fourth spline portion 6321 of the cover plate 632 through the third spline portion 711 arranged fixedly on the inner hole. Both ends of the non-magnetically conductive tooth-shaped member 714 are provided with first clutch teeth 712 and third clutch teeth 713. An end face of the inner gear ring 61 facing away from a gear part is integrally provided with an annular flange 612, and one side of the flange 612 facing the gear transmission mechanism 6 is fixedly provided with second clutch teeth 611 distributed uniformly along a peripheral direction.

In some embodiments of the present disclosure, the second clutch teeth 611 and the inner gear ring 61 are integrally formed by injection molding, and fourth clutch teeth 322 and the rear housing 32 are integrally formed by injection molding.

In some embodiments of the present disclosure, as illustrated in FIG. 1, the planetary carrier 631 and the cover plate 632 have hollow structures, and a third bushing 83 and a fourth bushing 84 are fixedly arranged in inner holes of the planetary carrier and the cover plate. The planetary carrier and the cover plate are rotatably fitted over the pulsator shaft 1 without contact, through the third bushing 83 and the fourth bushing 84. The sun gear 62 is arranged between the third bushing 83 and the fourth bushing 84. The third bushing mounting portion 6312 integrally arranged with the planetary carrier 631 is inserted into the avoidance groove 28 of the drum shaft sleeve 2 and axially limited to the first shaft shoulder 14. The double-end support can enhance the connection rigidity of the whole gear transmission mechanism 6, and avoid insufficient rigidity caused by the single-side support, thereby reducing washing noise, and improving the stability of the whole machine. At the same time, the axial size can be reduced by the arrangement of the avoidance groove 28.

In some embodiments of the present disclosure, as illustrated in FIG. 1, 2, and 11, the planetary carrier component 63 includes the planetary carrier 631 and the cover plate 632 fixedly connected to each other. The plurality of planetary gear shafts 6315 are distributed between the planetary carrier 631 and the cover plate 632 along the peripheral direction. The inner gear ring 61 is coaxially fixed to the belt pulley 51. The cover plate 632 has a cuplike structure, and the planetary carrier 632 is located within the cuplike structure. The inner gear ring 61 is arranged between an outer ring of the planetary carrier 631 and an inner wall of the cover plate 632, and an inner peripheral wall of the inner gear ring 61 meshes with the planetary gear 64.

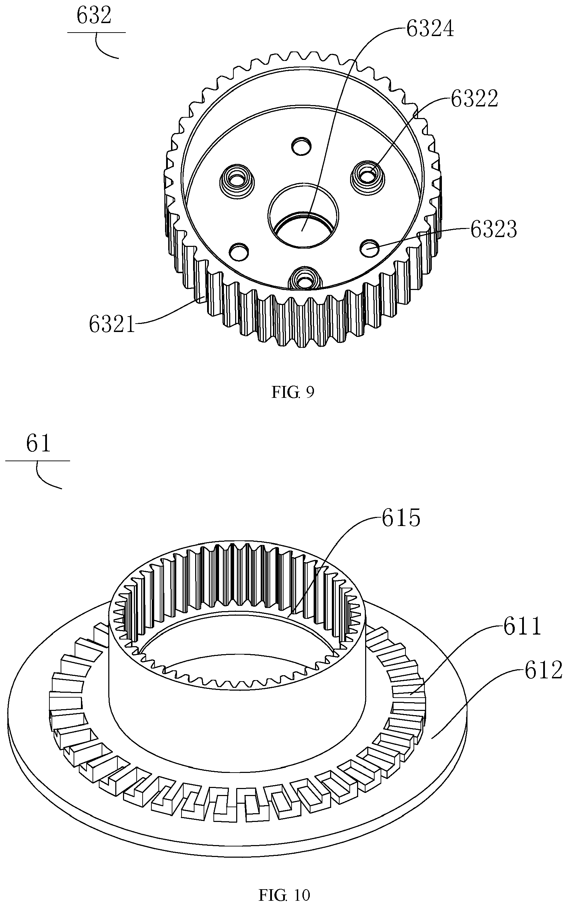

Further, as illustrated in FIG. 8 and 9, several first mounting holes 6313 and several second mounting holes 6322 are distributed between the planetary carrier 631 and the cover plate 632 along the peripheral direction respectively, and the first mounting holes 6313 and the second mounting holes 6322 are arranged correspondingly, between which several planetary gear shafts 6315 are mounted. The planetary gear 64 is fitted over the planetary gear shaft 6315 without contact and inwardly meshes with the sun gear 62 for transmission. The cover plate 632 has a cuplike structure, and the planetary carrier 631 is located within the cuplike structure. The inner gear ring 61 is coaxially arranged between the outer ring of the planetary carrier 631 and the inner wall of the cover plate 632, and inner teeth of the inner gear ring 61 mesh with the planetary gear 6412 for transmission.

Further, referring to FIGS. 8 and 11, the outer ring of the planetary carrier 631 is integrally provided with a first oil stopper 6314 projecting outwardly in an annular shape, and an inner ring of the inner gear ring 61 is integrally provided with a second oil stopper 615 projecting inwardly in an annular shape. When assembly is completed, a gap between the first oil stopper 6314 and the second oil stopper 615 does not exceed 1 mm. The second oil stopper 615, the first oil stopper 6314, the cover plate 632, and a body of the inner gear ring 61 form a labyrinth structure to prevent grease in the gear transmission mechanism 6 from splashing during operation.

In some optional embodiments of the present disclosure, as illustrated in FIG. 1, the clutch spring 73 is arranged between the bracket component 3 and the clutch sliding sleeve 71. It should be noted that when the washing machine 100 is in a non-working state, the clutch sliding sleeve 71 cooperates with the inner gear ring 61, the clutch spring 73 is compressed, and the clutch sliding sleeve 71 is at a dewatering station. During washing, the electromagnetic coil component 72 is energized, and the clutch sliding sleeve 71 moves towards a direction away from the inner gear ring 61 under an electromagnetic force and compresses the clutch spring 73 is compressed, such that the clutch sliding sleeve 71 cooperates with the bracket component 3, the planetary carrier component 63 is braked, the gear transmission mechanism 6 becomes a shaft-fixed gear train, and the pulsator shaft 1 and the drum shaft sleeve 2 rotate at different speeds. During dewatering, the electromagnetic coil component 72 is de-energized, the clutch sliding sleeve 71 is reset under the action of the clutch spring 73, and the clutch sliding sleeve 71 enters into cooperation with the inner gear ring 61, in which case the planetary carrier component 63 is fixedly connected with the inner gear ring 61, and the whole gear transmission mechanism 6 operates at the same speed, such that the pulsator shaft 1 and the drum shaft sleeve 2 rotate synchronously. Therefore, the electromagnetic coil component 72 is not energized in a dewatering mode, thereby avoiding damage caused by collision between the clutch sliding sleeve 71 and the inner gear ring 61 in case of power down during dewatering. For example, the clutch sliding sleeve 71 is provided with a spring mounting portion 716, and the clutch spring 73 is arranged between the spring mounting portion 716 and the rear housing 32.

In some embodiments of the present disclosure, the clutch spring 73 is arranged between the belt pulley 51 and the clutch sliding sleeve 71. It should be noted that when the washing machine 100 is in a non-working state, the clutch sliding sleeve 71 cooperates with the bracket component 3, the clutch spring 73 is compressed, and the clutch sliding sleeve 71 is at a washing station. During dewatering, the electromagnetic coil component 72 is energized, and the clutch sliding sleeve 71 moves towards a direction away from the bracket component 3 under an electromagnetic force and compresses the clutch spring 73, such that the clutch sliding sleeve 71 cooperates with the inner gear ring 61, in which case the planetary carrier component 63 is fixedly connected with the inner gear ring 61, and the whole gear transmission mechanism 6 operates at the same speed, such that the pulsator shaft 1 and the drum shaft sleeve 2 rotate synchronously. During washing, the electromagnetic coil component 72 is de-energized, the clutch sliding sleeve 71 is reset under the action of the clutch spring 73, and the clutch sliding sleeve 71 enters into cooperation with the bracket component 3; the planetary carrier component 63 is braked; the gear transmission mechanism 6 becomes a shaft-fixed gear train; and the pulsator shaft 1 and the drum shaft sleeve 2 rotate at different speeds. Therefore, during washing, the electromagnetic coil component 72 is not energized, thereby reducing the energy consumption of the washing machine 100. For example, as illustrated in FIG. 7, the clutch sliding sleeve 71 is provided with a spring mounting portion 716, and the clutch spring 73 is arranged between the spring mounting portion 716 and the belt pulley 51.

In some optional embodiments of the present disclosure, as illustrated in FIG. 7, a first axial end face of the clutch sliding sleeve 71 is formed with a plurality of first clutch teeth 712 arranged along the peripheral direction, and the inner gear ring 61 is formed with the second clutch teeth 611 meshing with the plurality of first clutch teeth 712; a second axial end face of the clutch sliding sleeve 71 is formed with a plurality of third clutch teeth 713 arranged along the peripheral direction, and the bracket component 3 is formed with the fourth clutch teeth 322 meshing with the plurality of third clutch teeth 713. Therefore, by meshing between the first clutch teeth 712 and the second clutch teeth 611, the reliability of cooperation between the clutch sliding sleeve 71 and the inner gear ring 61 can be improved; and by meshing between the third clutch teeth 713 and the fourth clutch teeth 322, the reliability of cooperation between the clutch sliding sleeve 71 and the bracket component 3 can be improved.

In some embodiments of the present disclosure, as illustrated in FIG. 7, the first clutch teeth 712 and the third clutch teeth 713 are formed in a step shape in an axial direction of the clutch sliding sleeve 71. Therefore, on the one hand, it is beneficial to increasing a meshing area between the first clutch teeth 712 and the second clutch teeth 611, to further improve the reliability of cooperation between the clutch sliding sleeve 71 and the inner gear ring 61; on the other hand, the step-shaped teeth mesh easily, a total height of the teeth is small, and the clutching reliability and the compression of axial height can be controlled effectively. For example, the first clutch teeth 712 and the third clutch teeth 713 each consist of first straight teeth and second straight teeth, the first straight teeth and the second straight teeth are perpendicular to each other, and projections of the first clutch teeth 712 and the third clutch teeth 713 in the axial direction are all step-like.

Further, as illustrated in FIG. 1, a fifth bushing 85 is mounted in an inner hole of the rear housing 32, and the planetary carrier component 63 is pivotally mounted in an inner hole of the fifth bushing 85 through a fourth bushing mounting portion 6324. Preferably, the first bushing 81 to the fifth bushing 85 are all made of oil-retaining bearing materials.

As illustrated in FIGS. 1 to 11, a drum washing machine 100 according to embodiments of the present disclosure includes: an outer tub 20, a pulsator 40, a drum 30, and the above drive system 10. The drum is rotatably arranged within the outer tube 20. The pulsator 40 is rotatably arranged at a bottom of the drum 30. A first end of the pulsator shaft 1 is connected with the pulsator 40. A first end of the drum shaft sleeve 2 is connected with the drum 30. The bracket component 3 is connected with the outer tub 20. The motor 4 is connected with the outer tube 20.

For the drum washing machine 100 according to the embodiments of the present disclosure, by providing the above drive system 10, and in turn by configuring the motor 4 as the inner rotor motor and transmitting the power of the motor 4 to the inner gear ring 61 by the belt 52 and the belt pulley 51, on the premise of ensuring the starting torque of the washing machine 100, the cost and energy consumption of the motor 4 can be reduced, which is advantageous to reducing the cost and energy consumption of the drive system 10. Compared with the traditional art where motors are fixed on motor shafts, the belt pulley 51 is connected to the second end of the drum shaft sleeve 2, which is advantageous to improving the rigidity of the drive system 10, and reducing the axial size of the drive system. In addition, when the clutch mechanism 7 cooperates with the gear transmission mechanism 6, the pulsator shaft 1 and the drum shaft sleeve 2 rotate synchronously; when the clutch mechanism 7 cooperates with the bracket component 3, the pulsator shaft 1 and the drum shaft sleeve 2 rotate at different speeds. As a result, the pulsator shaft 1 and the drum shaft sleeve 2 can be switched between two modes of the synchronous rotation and the differential rotation, to allow the washing machine 100 to adapt to clothes of different materials.

For example, as illustrated in FIG. 1, when the clutch mechanism 7 makes the planetary carrier component 63 and the rear housing 32 fixedly connected, the motor 4 transmits the power to the inner gear ring 61 through the belt pulley 52 in a speed-decreasing and distance-increasing manner, then the inner gear ring 61 transmits the power to the sun gear 62 through the planetary gear in a speed-increasing and distance-decreasing manner, and the sun gear 62 and the inner gear ring 61 drive the pulsator 40 and the drum 30 to operate at different speeds through the drum shaft sleeve 2 and the pulsator shaft 1 respectively. When the clutch mechanism 7 makes the inner gear ring 61 and the planetary carrier component 63 fixedly connected, the whole gear transmission 6 operates at the same speed, the motor 4 transmits the power to the inner gear ring 61 through the motor 4, and then drives the pulsator 40 and the drum 30 to operate at the same speed through the gear transmission mechanism 6.

In some embodiments of the present disclosure, the drum washing machine 100 can switch between a dual-output mode and a single-output mode. It should be noted that by controlling whether the pulsator 40 and the drum 30 are in a differential speed operation state during washing, the purpose of switching between the single-output washing mode and the dual-output washing mode can be realized, thereby achieving a drum washing machine 100 that can switch between the single-output washing mode and the dual-output washing mode according to washing requirements, and enabling the drum washing machine 100 to adapt to clothes of different materials.

Specifically, the dual-output mode is as follows: under a washing condition, the motor 4 runs at a low speed; the clutch mechanism 7 cooperates with the bracket component 3; the belt pulley 51 drives the drum 30 to operate at a constant speed ratio and drives the pulsator 40 to operate through the gear transmission mechanism 6; the pulsator shaft 1 and the drum shaft sleeve 2 rotate at different speeds; a speed ratio of the pulsator 40 to the drum 30 is a transmission ratio of the gear transmission mechanism 6, in which case the washing machine 100 is in a dual-output washing state and has a strong cleaning ability to wash stubborn stains or clothes made of washable materials. Under a dewatering condition, the motor 4 runs at a high speed; the clutch mechanism 7 cooperates with the gear transmission mechanism 6; the pulsator shaft 1 and the drum shaft sleeve 2 rotate synchronously; the pulsator 40 and the drum 30 are driven by the motor 4 through the belt pulley 51 to operate at the same high speed.

Specifically, the single-output mode is as follows: under a washing condition, the motor 4 runs at a low speed; the clutch mechanism 7 cooperates with the gear transmission mechanism 6; the pulsator 40 and the drum 30 are driven by the motor 4 through the belt pulley 51 to operate at the same low speed, in which case the washing machine 100 is in a single-output washing state, has the advantage of not damaging clothes, and can wash clothes that need gentle washing such as cashmere or silk. Under a dewatering condition, the motor 4 runs at a high speed, the clutch mechanism 7 cooperates with the gear transmission mechanism 6; the pulsator shaft 1 and the drum shaft sleeve 2 rotate synchronously; the pulsator 40 and the drum 30 are driven by the motor 4 through the belt pulley 51 to operate at the same high speed. At this time, the clutch mechanism 7 does not switch stations during the conversion between the washing condition and the dewatering condition, which can be realize through an electronic control program.

## Claims

1. A drive system (10) of a washing machine (100), wherein the washing machine (100) at least comprises the drive system (10), an outer tub (20), a drum (30), and a pulsator (40), the drum (30) being rotatably arranged within the outer tub (20), and the pulsator (40) being rotatably arranged at a bottom of the drum (30),
wherein the drive system (10) comprises:
a pulsator shaft (1) having a first end connected to the pulsator (40);
a drum shaft sleeve (2) fitted over an outer periphery of the pulsator shaft (1), the pulsator shaft (1) being rotatable relative to the drum shaft sleeve (2), and a first end of the drum shaft sleeve (2) being connected to the drum (30);
a bracket component (3), the drum shaft sleeve (2) being arranged on the bracket component (3) and rotatable relative to the bracket component (3), and the bracket component (3) being connected to the outer tub (20);
a motor (4);
a belt transmission mechanism (5) configured to transmit power of the motor (4) to the drum shaft sleeve (2) and drive the drum shaft sleeve (2) to rotate;
a gear transmission mechanism (6), a second end of the pulsator shaft (1) being connected to the belt transmission mechanism (5) through the gear transmission mechanism (6); and
a clutch mechanism (7) configured to cooperate with one of the gear transmission mechanism (6) and the bracket component (3), wherein in a configuration where the clutch mechanism (7) cooperates with the gear transmission mechanism (6), the pulsator shaft (1) and the drum shaft sleeve (2) rotate synchronously; **characterized in that** in a configuration where the clutch mechanism (7) cooperates with the bracket component (3), the pulsator shaft (1) and the drum shaft sleeve (2) rotate at different speeds.

2. The drive system (10) of the washing machine (100) according to claim 1, wherein the belt transmission mechanism (5) comprises a belt pulley (51) and a belt (52); one end of the belt (52) is fitted over an outer peripheral side of an output shaft (41) of the motor (4), while the other end of the belt is fitted over an outer peripheral side of the belt pulley (51); the belt pulley (51) is connected to a second end of the drum shaft sleeve (2).

3. The drive system (10) of the washing machine (100) according to claim 2, wherein the belt pulley (51) has a central hole (511) formed with a first spline portion (512) on an inner peripheral wall of the central hole (511), the second end of the drum shaft sleeve (2) has a belt pulley connecting portion fitted in the central hole (511), and the belt pulley connecting portion (21) is formed with a second spline portion (211) cooperating with the first spline portion (512).

4. The drive system (10) of the washing machine (100) according to claim 2, wherein the bracket component (3) comprises a rear housing (32) formed with an avoidance notch (321) on an outer peripheral wall of the rear housing (32), and one end of the belt (52) passes through the avoidance notch (321) and is fitted over the outer peripheral side of the output shaft (41).

5. The drive system (10) of the washing machine (100) according to any one of claims 2 to 4, wherein the gear transmission mechanism (6) comprises:
an inner gear ring (61) connected to and arranged coaxially with the belt pulley (51), wherein when the clutch mechanism (7) cooperates with the inner gear ring (61), the pulsator shaft (1) and the drum shaft sleeve (2) rotate synchronously;
a sun gear (62) connected to and arranged coaxially with the pulsator shaft (1), and located at an inner side of the inner gear ring (61);
a planetary carrier component (63) having a plurality of planetary gear shafts (6315), and fitted over the outer periphery of the pulsator shaft (1) and rotatable relative to the pulsator shaft (1); and
a plurality of planetary gears (64) rotatably fitted over the plurality of planetary gear shafts (6315) correspondingly, located between the inner gear ring (61) and the sun gear (62), arranged around an outer periphery of the sun gear (62), and meshing with the inner gear ring (61) and the sun gear (62).

6. The drive system (10) of the washing machine (100) according to claim 5, wherein the plurality of planetary gears (64) form one group, and each planetary gear (64) directly meshes with the inner gear ring (61) and the sun gear (62).

7. The drive system (10) of the washing machine (100) according to claim 5, wherein the plurality of planetary gears (64) form two groups meshing with each other, and one of the two groups of planetary gears (64) meshes with the gear ring while the other group meshes with the sun gear (62).

8. The drive system (10) of the washing machine (100) according to claim 5, wherein an inner peripheral wall of the second end of the drum shaft sleeve (2) is formed with an avoidance groove (28) penetrating an axial end face of the second end of the drum shaft sleeve (2), a part of the planetary carrier component (63) is accommodated within the avoidance groove (28), and the planetary carrier component (63) is spaced apart from the drum shaft sleeve (2).

9. The drive system (10) of the washing machine (100) according to claim 5, wherein the inner gear ring (61) is integrally formed on the belt pulley (51) by injection molding.

10. The drive system (10) of the washing machine (100) according to claim 5, wherein the clutch mechanism (7) comprises:
a clutch sliding sleeve (71) formed with a third spline portion (711) on an inner peripheral wall of the clutch sliding sleeve (71), wherein the planetary carrier component (63) comprises a planetary carrier (631) and a cover plate (632) connected with each other; the inner gear ring (61) is rotatably arranged between an outer peripheral wall of the planetary carrier (631) and an inner peripheral wall of the cover plate (632); a mounting space is defined between the planetary carrier (631) and the cover plate (632); the sun gear (62) and the plurality of planetary gears (64) are located within the mounting space; an outer peripheral wall of the cover plate (632) is formed with a fourth spline portion (6321) cooperating with the third spline portion (711); and the clutch sliding sleeve (71) is slidable between a first position and a second position along an axial direction relative to the cover plate (632);
an electromagnetic coil component (72) adapted to drive the clutch sliding sleeve (71) to slide towards a first direction along the axial direction when the electromagnetic coil component (72) is energized; and
a clutch spring (73) configured to drive the clutch sliding sleeve (71) to slide towards a second direction opposite to the first direction, wherein when the clutch sliding sleeve (71) slides towards the first direction to the first position, the clutch sliding sleeve (71) cooperates with the inner gear ring (61); when the clutch sliding sleeve (71) slides towards the second direction to the second position, the clutch sliding sleeve (71) cooperates with the bracket component (3).

11. The drive system (10) of the washing machine (100) according to claim 10, wherein the clutch spring (73) is arranged between the bracket component (3) and the clutch sliding sleeve (71), or the clutch spring (73) is arranged between the belt pulley (51) and the clutch sliding sleeve (71).

12. The drive system (10) of the washing machine (100) according to claim 10, wherein a first axial end face of the clutch sliding sleeve (71) is formed with a plurality of first clutch teeth (712) arranged along a peripheral direction; the inner gear ring (61) is formed with a plurality of second clutch teeth (611) meshing with the plurality of first clutch teeth (712); a second axial end face of the clutch sliding sleeve (71) is formed with a plurality of third clutch teeth (713) arranged along the peripheral direction; and the bracket component (3) is formed with a plurality of fourth clutch teeth (322) meshing with the plurality of third clutch teeth (713).

13. The drive system (10) of the washing machine (100) according to claim 12, wherein the first clutch teeth (712) and the third clutch teeth (713) are each formed in a step shape in the axial direction of the clutch sliding sleeve (71).

14. The drive system (10) of the washing machine (100) according to any one of claims 1 to 13, wherein the bracket component (3) comprises a bearing bracket (31) and a rear housing (32) connected with each other; the bearing bracket (31) is provided with a bearing fitted over an outer periphery of the drum shaft sleeve (2); the rear housing (32) is arranged at an axial side of the bearing bracket (31); an accommodating space is defined between the bearing bracket (31) and the rear housing (32); and the belt transmission mechanism (5), the gear transmission mechanism (6), and the clutch mechanism (7) are located within the accommodating space.

15. A drum washing machine (100), comprising:
an outer tub (20);
a drum (30) rotatably arranged within the outer tub (20);
a pulsator (40) rotatably arranged at a bottom of the drum (30); and
the drive system (10) according to any one of claims 1 to 14, wherein the first end of the pulsator shaft (1) is connected to the pulsator (40), the first end of the drum shaft sleeve (2) is connected to the drum (30), and the bracket component (3) is connected to the outer tub (20).

## Patentansprüche

1. Ein Antriebssystem (10) einer Waschmaschine (100), wobei die Waschmaschine (100) zumindest das Antriebssystem (10), eine Außenwanne (20), eine Trommel (30) und einen Pulsator (40) aufweist, wobei die Trommel (30) drehbar innerhalb der Außenwanne (20) angeordnet ist und der Pulsator (40) drehbar an einem Boden der Trommel (30) angeordnet ist, wobei das Antriebssystem (10) folgendes aufweist:
eine Pulsatorwelle (1) mit einem ersten Ende, das mit dem Pulsator (40) verbunden ist;
eine Trommelwellenhülse (2), die über einem Außenumfang der Pulsatorwelle (1) angepasst ist, wobei die Pulsatorwelle (1) relativ zu der Trommelwellenhülse (2) drehbar ist und ein erstes Ende der Trommelwellenhülse (2) mit der Trommel (30) verbunden ist;
ein Trägerbauteil (3), wobei die Trommelwellenhülse (2) an dem Trägerbauteil (3) angeordnet und relativ zu dem Trägerbauteil (3) drehbar ist, und wobei das Trägerbauteil (3) mit der Außenwanne (20) verbunden ist;
einen Motor (4);
einen Riemenübertragungsmechanismus (5), der so konfiguriert ist, dass er die Leistung des Motors (4) auf die Trommelwellenhülse (2) überträgt und die Trommelwellenhülse (2) drehend antreibt;
einen Zahnradübertragungsmechanismus (6), wobei ein zweites Ende der Pulsatorwelle (1) durch den Zahnradübertragungsmechanismus (6) mit dem Riemenübertragungsmechanismus (5) verbunden ist; und
einen Kupplungsmechanismus (7), der so konfiguriert ist, dass er entweder mit dem Zahnradübertragungsmechanismus (6) oder mit dem Trägerbauteil (3) zusammenwirkt, wobei in einer Ausgestaltung, in der der Kupplungsmechanismus (7) mit dem Zahnradübertragungsmechanismus (6) zusammenwirkt, die Pulsatorwelle (1) und die Trommelwellenhülse (2) synchron rotieren;
**dadurch gekennzeichnet, dass** in einer Ausgestaltung, in der der Kupplungsmechanismus (7) mit dem Trägerbauteil (3) zusammenwirkt, die Pulsatorwelle (1) und die Trommelwellenhülse (2) mit unterschiedlichen Geschwindigkeiten rotieren.

2. Das Antriebssystem (10) der Waschmaschine (100) nach Anspruch 1, wobei der Riemenübertragungsmechanismus (5) eine Riemenscheibe (51) und einen Riemen (52) umfasst; ein Ende des Riemens (52) über eine äußere Umfangsseite einer Abtriebswelle (41) des Motors (4) angebracht ist, während das andere Ende des Riemens über eine äußere Umfangsseite der Riemenscheibe (51) angebracht ist; die Riemenscheibe (51) mit einem zweiten Ende der Trommelwellenhülse (2) verbunden ist.

3. Das Antriebssystem (10) der Waschmaschine (100) nach Anspruch 2, wobei die Riemenscheibe (51) ein zentrales Loch (511) aufweist, das mit einem ersten Keilabschnitt (512) an einer inneren Umfangswand des zentralen Lochs (511) ausgebildet ist, das zweite Ende der Trommelwellenhülse (2) einen Riemenscheibenverbindungsabschnitt aufweist, der in das zentrale Loch (511) eingepasst ist, wobei der Riemenscheibenverbindungsabschnitt (21) mit einem zweiten Keilabschnitt (211) ausgebildet ist, der mit dem ersten Keilabschnitt (512) zusammenwirkt.

4. Das Antriebssystem (10) der Waschmaschine (100) nach Anspruch 2, wobei das Trägerbauteil (3) ein hinteres Gehäuse (32) umfasst, das an einer äußeren Umfangswand des hinteren Gehäuses (32) mit einer Ausweichkerbe (321) versehen ist, wobei ein Ende des Riemens (52) durch die Ausweichkerbe (321) verläuft und über die äußere Umfangsseite der Abtriebswelle (41) angebracht ist.

5. Das Antriebssystem (10) der Waschmaschine (100) nach einem der Ansprüche 2 bis 4, wobei der Zahnradübertragungsmechanismus (6) folgendes umfasst:
einen Innenzahnkranz (61), der mit der Riemenscheibe (51) verbunden und koaxial zu dieser angeordnet ist, wobei sich die Pulsatorwelle (1) und die Trommelwellenhülse (2) synchron drehen, wenn der Kupplungsmechanismus (7) mit dem Innenzahnkranz (61) zusammenwirkt;
ein Sonnenrad (62), das mit der Pulsatorwelle (1) verbunden und koaxial zu ihr angeordnet ist und sich an einer Innenseite des Innenzahnkranzes (61) befindet;
eine Planetenträgereinheit (63) mit einer Vielzahl von Planetenradwellen (6315), die auf dem Außenumfang der Pulsatorwelle (1) angebracht und im Verhältnis zur Pulsatorwelle (1) drehbar ist; und
eine Vielzahl von Planetenrädern (64), die entsprechend auf der Vielzahl von Planetenradwellen (6315) drehbar angebracht sind, die zwischen dem inneren Zahnkranz (61) und dem Sonnenrad (62) positioniert sind, die um einen äußeren Umfang des Sonnenrades (62) angeordnet sind und die mit dem inneren Zahnkranz (61) und dem Sonnenrad (62) kämmen.

6. Das Antriebssystem (10) der Waschmaschine (100) nach Anspruch 5, wobei die Vielzahl von Planetenrädern (64) eine Gruppe ausbilden und jedes Planetenrad (64) direkt mit dem Innenzahnkranz (61) und dem Sonnenrad (62) kämmt.

7. Das Antriebssystem (10) der Waschmaschine (100) nach Anspruch 5, wobei die Vielzahl von Planetenrädern (64) zwei Gruppen ausbilden, die miteinander kämmen, und eine der beiden Gruppen von Planetenrädern (64) mit dem Zahnkranz kämmt, während die andere Gruppe mit dem Sonnenrad (62) kämmt.

8. Das Antriebssystem (10) der Waschmaschine (100) nach Anspruch 5, wobei eine innere Umfangswand des zweiten Endes der Trommelwellenhülse (2) eine Ausweichnut (28) aufweist, die eine axiale Endfläche des zweiten Endes der Trommelwellenhülse (2) durchdringt, wobei ein Teil der Planetenträgereinheit (63) innerhalb der Ausweichnut (28) aufgenommen ist und die Planetenträgereinheit (63) von der Trommelwellenhülse (2) beabstandet ist.

9. Das Antriebssystem (10) der Waschmaschine (100) nach Anspruch 5, wobei der Innenzahnkranz (61) durch Spritzgießen einstückig auf der Riemenscheibe (51) ausgebildet ist.

10. Das Antriebssystem (10) der Waschmaschine (100) nach Anspruch 5, wobei der Kupplungsmechanismus (7) umfasst:
eine Kupplungsschiebehülse (71), die einen dritten Keilabschnitt (711) an einer inneren Umfangswand der Kupplungsschiebehülse (71) ausbildet, wobei die Planetenträgereinheit (63) einen Planetenträger (631) und eine Deckplatte (632) aufweist, die miteinander verbunden sind; der Innenzahnkranz (61) ist drehbar zwischen einer äußeren Umfangswand des Planetenträgers (631) und einer inneren Umfangswand der Deckplatte (632) angeordnet; ein Montageraum ist zwischen dem Planetenträger (631) und der Abdeckplatte (632) definiert; das Sonnenrad (62) und die Vielzahl von Planetenrädern (64) sind innerhalb des Montageraums angeordnet; eine äußere Umfangswand der Abdeckplatte (632) die einen vierten Keilabschnitt (6321) ausbildet, der mit dem dritten Keilabschnitt (711) zusammenwirkt; und wobei die Kupplungsschiebehülse (71) zwischen einer ersten Position und einer zweiten Position entlang einer axialen Richtung relativ zu der Abdeckplatte (632) verschiebbar ist;
eine elektromagnetische Spulenbaugruppe (72), die geeignet ist, um die Kupplungsschiebehülse (71) so anzutreiben, dass sie in eine erste Richtung entlang der axialen Richtung gleitet, wenn die elektromagnetische Spulenbaugruppe (72) angeregt wird; und
eine Kupplungsfeder (73), die so ausgestaltet ist, dass sie die Kupplungsschiebehülse (71) so antreibt, um in eine zweite Richtung zu gleiten, die der ersten Richtung entgegengesetzt ist, wobei die Kupplungsschiebehülse (71) mit dem inneren Zahnkranz (61) zusammenwirkt, wenn die Kupplungsschiebehülse (71) in die erste Richtung in die erste Position gleitet; und wobei die Kupplungsschiebehülse (71) mit dem Trägerbauteil (3) zusammenwirkt, wenn die Kupplungsschiebehülse (71) in die zweite Richtung in die zweite Position gleitet.

11. Das Antriebssystem (10) der Waschmaschine (100) nach Anspruch 10, wobei die Kupplungsfeder (73) zwischen dem Trägerbauteil (3) und der Kupplungsschiebehülse (71) angeordnet ist, oder wobei die Kupplungsfeder (73) zwischen der Riemenscheibe (51) und der Kupplungsschiebehülse (71) angeordnet ist.

12. Das Antriebssystem (10) der Waschmaschine (100) nach Anspruch 10, wobei eine erste axiale Stirnfläche der Kupplungsschiebehülse (71) mit einer Vielzahl von ersten Kupplungszähnen (712) ausgebildet ist, die entlang einer Umfangsrichtung angeordnet sind; der Innenzahnkranz (61) mit einer Vielzahl von zweiten Kupplungszähnen (611) ausgebildet ist, die mit der Vielzahl von ersten Kupplungszähnen (712) kämmen; eine zweite axiale Endfläche der Kupplungsschiebehülse (71) mit einer Vielzahl von dritten Kupplungszähnen (713) ausgebildet ist, die entlang der Umfangsrichtung angeordnet sind; und wobei das Trägerbauteil (3) mit einer Vielzahl von vierten Kupplungszähnen (322) ausgebildet ist, die mit der Vielzahl von dritten Kupplungszähnen (713) kämmen.

13. Das Antriebssystem (10) der Waschmaschine (100) nach Anspruch 12, wobei die ersten Kupplungszähne (712) und die dritten Kupplungszähne (713) jeweils stufenförmig in der axialen Richtung der Kupplungsschiebehülse (71) ausgebildet sind.

14. Das Antriebssystem (10) der Waschmaschine (100) nach einem der Ansprüche 1 bis 13, wobei das Trägerbauteil (3) einen Lagerträger (31) und ein hinteres Gehäuse (32) aufweist, die miteinander verbunden sind; der Lagerträger (31) mit einem Lager ausgebildet ist, das über einen Außenumfang der Trommelwellenhülse (2) angebracht ist; das hintere Gehäuse (32) an einer axialen Seite des Lagerträgers (31) angeordnet ist; ein Aufnahmeraum zwischen dem Lagerträger (31) und dem hinteren Gehäuse (32) definiert ist; und wobei der Riemenübertragungsmechanismus (5), der Zahnradübertragungsmechanismus (6) und der Kupplungsmechanismus (7) innerhalb des Aufnahmebereichs angeordnet sind.

15. Eine Trommelwaschmaschine (100), umfassend:
eine äußere Wanne (20);
eine Trommel (30), die drehbar innerhalb der äußeren Wanne (20) angeordnet ist;
einen Pulsator (40), der drehbar an einem Boden der Trommel (30) angeordnet ist; und
das Antriebssystem (10) nach einem der Ansprüche 1 bis 14, wobei das erste Ende der Pulsatorwelle (1) mit dem Pulsator (40) verbunden ist, das erste Ende der Trommelwellenhülse (2) mit der Trommel (30) verbunden ist und das Trägerbauteil (3) mit der Außenwanne (20) verbunden ist.

## Revendications

1. Système d'entraînement (10) d'un lave-linge (100), dans lequel le lave-linge (100) comprend au moins le système d'entraînement (10), une cuve extérieure (20), un tambour (30) et un pulsateur (40), le tambour (30) étant disposé en rotation au sein de la cuve extérieure (20), et le pulsateur (40) étant disposé en rotation au fond du tambour (30),
dans lequel le système d'entraînement (10) comprend :
un arbre de pulsateur (1) présentant une première extrémité connectée au pulsateur (40) ;
un manchon d'arbre de tambour (2) positionné par-dessus une périphérie extérieure de l'arbre de pulsateur (1), l'arbre de pulsateur (1) étant mobile en rotation par rapport au manchon d'arbre de tambour (2), et une première extrémité du manchon d'arbre de tambour (2) étant connectée au tambour (30) ;
un composant de fixation (3), le manchon d'arbre de tambour (2) étant disposé sur le composant de fixation (3) et mobile en rotation par rapport au composant de fixation (3), et le composant de fixation (3) étant connecté à la cuve extérieure (20) ;
un moteur (4) ;
un mécanisme de transmission par courroie (5) configuré pour transmettre une puissance du moteur (4) au manchon d'arbre de tambour (2) et entraîner le manchon d'arbre de tambour (2) en rotation ;
un mécanisme de transmission par engrenage (6), une deuxième extrémité de l'arbre de pulsateur (1) étant connecté au mécanisme de transmission par courroie (5) via le mécanisme de transmission par engrenage (6) ; et
un mécanisme d'embrayage (7) configuré pour coopérer avec un du mécanisme de transmission par engrenage (6) et du composant de fixation (3), dans lequel dans une configuration où le mécanisme d'embrayage (7) coopère avec le mécanisme de transmission par engrenage (6), l'arbre de pulsateur (1) et le manchon d'arbre de tambour (2) tournent de manière synchrone ; **caractérisé en ce que** dans une configuration où le mécanisme d'embrayage (7) coopère avec le composant de fixation (3), l'arbre de pulsateur (1) et le manchon d'arbre de tambour (2) tournent à des régimes différents.

2. Le système d'entraînement (10) du lave-linge (100) selon la revendication 1, dans lequel le mécanisme de transmission par courroie (5) comprend une poulie de courroie (51) et une courroie (52) ; une extrémité de la courroie (52) est positionnée par-dessus un côté périphérique extérieur d'un arbre de sortie (41) du moteur (4), tandis que l'autre extrémité de la courroie est positionnée par-dessus un côté périphérique extérieur de la poulie de courroie (51) ; la poulie de courroie (51) est connectée à une deuxième extrémité du manchon d'arbre de tambour (2).

3. Le système d'entraînement (10) du lave-linge (100) selon la revendication 2, dans lequel la poulie de courroie (51) présente un trou central (511) constitué d'une première partie à cannelures (512) sur une paroi périphérique intérieure du trou central (511), la deuxième extrémité du manchon d'arbre de tambour (2) présente une partie de connexion de poulie de courroie installée dans le trou central (511), et la partie de connexion de poulie de courroie (21) est constituée d'une deuxième partie à cannelures (211) coopérant avec la première partie à cannelures (512).

4. Le système d'entraînement (10) du lave-linge (100) selon la revendication 2, dans lequel le composant de fixation (3) comprend un boîtier arrière (32) constitué d'une encoche d'évitement (321) sur une paroi périphérique extérieure du boîtier arrière (32), et une extrémité de la courroie (52) traverse l'encoche d'évitement (321) et est positionnée par-dessus le côté périphérique extérieur de l'arbre de sortie (41).

5. Le système d'entraînement (10) du lave-linge (100) selon l'une quelconque des revendications 2 à 4, dans lequel le mécanisme de transmission par engrenage (6) comprend :
une couronne à engrenage interne (61) connectée et disposée coaxialement à la poulie de courroie (51), dans lequel lorsque le mécanisme d'embrayage (7) coopère avec la couronne à engrenage interne (61), l'arbre de pulsateur (1) et le manchon d'arbre de tambour (2) tournent de manière synchrone ;
un engrenage solaire (62) connecté et disposé coaxialement à l'arbre de pulsateur (1), et positionné sur un côté intérieur de la couronne à engrenage interne (61) ;
un composant porte-satellites (63) présentant une pluralité d'arbres d'engrenage planétaire (6315), et positionné par-dessus la périphérie extérieure de l'arbre de pulsateur (1) et mobile en rotation par rapport à l'arbre de pulsateur (1) ; et
une pluralité d'engrenages planétaires (64) disposés en rotation par-dessus la pluralité d'arbres d'engrenage planétaire (6315) de manière correspondante, positionnés entre la couronne à engrenage interne (61) et l'engrenage solaire (62), disposés autour d'une périphérie extérieure de l'engrenage solaire (62), et se solidarisant avec la couronne à engrenage interne (61) et l'engrenage solaire (62).

6. Le système d'entraînement (10) du lave-linge (100) selon la revendication 5, dans lequel la pluralité d'engrenages planétaires (64) constitue un groupe, et chaque engrenage planétaire (64) se solidarise directement avec la couronne à engrenage interne (61) et l'engrenage solaire (62).

7. Le système d'entraînement (10) du lave-linge (100) selon la revendication 5, dans lequel la pluralité d'engrenages planétaires (64) constitue deux groupes se solidarisant l'un avec l'autre, et un des deux groupes d'engrenages planétaires (64) se solidarise directement avec la couronne à engrenage interne tandis que l'autre groupe se solidarise avec l'engrenage solaire (62).

8. Le système d'entraînement (10) du lave-linge (100) selon la revendication 5, dans lequel une paroi périphérique intérieure de la deuxième extrémité du manchon d'arbre de tambour (2) est constituée d'une gorge d'évitement (28) pénétrant une face d'extrémité axiale de la deuxième extrémité du manchon d'arbre de tambour (2), une partie du composant porte-satellites (63) est accueillie au sein de la gorge d'évitement (28), et le composant porte-satellites (63) est éloigné par espacement du manchon d'arbre de tambour (2).

9. Le système d'entraînement (10) du lave-linge (100) selon la revendication 5, dans lequel la couronne à engrenage interne (61) est intégralement constituée sur la poulie de courroie (51) par moulage par injection.

10. Le système d'entraînement (10) du lave-linge (100) selon la revendication 5, dans lequel le mécanisme d'embrayage (7) comprend :
un manchon coulissant d'embrayage (71) constitué d'une troisième partie à cannelures (711) sur une paroi périphérique interne du manchon coulissant d'embrayage (71), dans lequel le composant porte-satellites (63) comprend un porte-satellites (631) et une plaque de capot (632) connectés l'un à l'autre ; la couronne à engrenage interne (61) est disposée en rotation entre une paroi périphérique extérieure du porte-satellites (631) et une paroi périphérique intérieure de la plaque de capot (632) ; un espace de montage est défini entre le porte-satellites (631) et la plaque de capot (632) ; l'engrenage solaire (62) et la pluralité d'engrenages planétaires (64) sont positionnés au sein de l'espace de montage ; une paroi périphérique extérieure de la plaque de capot (632) est constituée d'une quatrième partie à cannelures (6321) coopérant avec la troisième partie à cannelures (711) ; et le manchon coulissant d'embrayage (71) est mobile en coulissement entre une première position et une deuxième position le long d'une direction axiale par rapport à la plaque de capot (632) ;
un composant de bobine électromagnétique (72) adapté pour entraîner le manchon coulissant d'embrayage (71) à coulisser vers une première direction le long de la direction axiale lorsque le composant de bobine électromagnétique (72) est sous tension ; et
un ressort d'embrayage (73) configuré pour entraîner le manchon coulissant d'embrayage (71) à coulisser vers une deuxième direction opposée à la première direction, dans lequel lorsque le manchon coulissant d'embrayage (71) coulisse vers la première direction vers la première position, le manchon coulissant d'embrayage (71) coopère avec la couronne à engrenage interne (61) ; lorsque le manchon coulissant d'embrayage (71) coulisse vers la deuxième direction vers la deuxième position, le manchon coulissant d'embrayage (71) coopère avec le composant de fixation (3).

11. Le système d'entraînement (10) du lave-linge (100) selon la revendication 10, dans lequel le ressort d'embrayage (73) est disposé entre le composant de fixation (3) et le manchon coulissant d'embrayage (71), ou le ressort d'embrayage (73) est disposé entre la poulie de courroie (51) et le manchon coulissant d'embrayage (71).

12. Le système d'entraînement (10) du lave-linge (100) selon la revendication 10, dans lequel une première face d'extrémité axiale du manchon coulissant d'embrayage (71) est constituée d'une pluralité de premières dents d'embrayage (712) disposée le long d'une direction périphérique ; la couronne à engrenage interne (61) est constituée d'une pluralité de deuxièmes dents d'embrayage (611) se solidarisant avec la pluralité de premières dents d'embrayage (712) ; une deuxième face d'extrémité axiale du manchon coulissant d'embrayage (71) est constituée d'une pluralité de troisièmes dents d'embrayage (713) disposée le long de la direction périphérique ; et le composant de fixation (3) est constitué d'une pluralité de quatrièmes dents d'embrayage (322) se solidarisant avec la pluralité de troisièmes dents d'embrayage (713).

13. Le système d'entraînement (10) du lave-linge (100) selon la revendication 12, dans lequel les premières dents d'embrayage (712) et les troisièmes dents d'embrayage (713) sont chacune constituées en une forme étagée dans la direction axiale du manchon coulissant d'embrayage (71).

14. Le système d'entraînement (10) du lave-linge (100) selon l'une quelconque des revendications 1 à 13, dans lequel le composant de fixation (3) comprend un corps de palier (31) et une boîtier arrière (32) connectés l'un à l'autre ; le corps de palier (31) est doté d'un palier installé par-dessus une périphérie extérieure du manchon d'arbre de tambour (2) ; le boîtier arrière (32) est disposé sur un côté axial du corps de palier (31) ; un espace d'accueil est défini entre le corps de palier (31) et le boîtier arrière (32) ; et le mécanisme de transmission par courroie (5), le mécanisme de transmission par engrenage (6) et le mécanisme d'embrayage (7) sont installés au sein de l'espace d'accueil.

15. Lave-linge à tambour (100), comprenant :
une cuve extérieure (20) ;
un tambour (30) disposé en rotation au sein de la cuve extérieure (20) ;
un pulsateur (40) disposé en rotation sur un fond du tambour(30) ; et
le système d'entraînement (10) selon l'une quelconque des revendications 1 à 14, dans lequel la première extrémité de l'arbre de pulsateur (1) est connectée au pulsateur (40), la première extrémité du manchon d'arbre de tambour (2) est connectée au tambour (30), et le composant de fixation (3) est connecté à la cuve extérieure (20).
